# EUROPEAN PATENT APPLICATION

(11) **EP 4 817 966 A1**
(43) Date of publication of application: **07.10.2026**
(21) Application number: 24896416.5
(22) Date of filing: 22.11.2024
(51) Int. Cl.: B60R 21/215, B60R 21/203, B60R 21/2165

(54) **COVER PLATE OF AIRBAG AND VEHICLE STEERING WHEEL**

(30) Priority: 29.11.2023 CN 202323228266 U
(71) Applicant: Yanfeng International Automotive Technology Co., Ltd., Shanghai 201306 (CN)
(72) Inventor: GONG, Liu, Shanghai 201315 (CN); LIU, Cheng, Shanghai 201315 (CN); SUN, Jie, Shanghai 201315 (CN)
(74) Representative: Trinks, Ole
(86) International application number: PCT/CN2024/133686
(87) International publication number: WO 2025/113325

(57) **Abstract**

A cover plate (1) of an airbag and a vehicle steering wheel. The cover plate (1) of the airbag comprises a skeleton layer (11) and a skin layer (12). The skin layer (12) is located on the outer surface of the skeleton layer (11) and is integrated with the skeleton layer (11). A weakening line (2) is constructed on the cover plate (1), and the strength of the weakening line (2) is less than that of other portions of the cover plate (1); the weakening line (2) comprises at least one tearing section (3) and at least one extension section (4) connected to the tearing section (3), and the strength of the tearing section (3) is less than that of the extension section (4). According to the cover plate (1) of the airbag, the skeleton layer (11) and the skin layer (12) are integrally formed. During the manufacturing of the cover plate (1), the covering operation of skin is not needed, which helps to reduce the manufacturing costs of the cover plate (1).

## Description

### TECHNICAL FIELD

The present application relates to the technical field of vehicles, and more particularly relates to an airbag cover. The present application further relates to a vehicle steering wheel comprising such an airbag cover.

### BACKGROUND ART

Automobiles are usually configured with airbag assemblies. For example, an airbag assembly is installed both in the center of a steering wheel and below an instrument panel. An airbag assembly usually comprises an airbag and a cover covering the airbag.

In the prior art, the cover usually comprises a cover body and a skin coated on the cover body to meet the strength requirements of the product and improve the aesthetics of the product. However, the coating operation of the skin is relatively complicated, and typically requires the use of an adhesive, which leads to a higher manufacturing cost of the cover.

### SUMMARY OF THE INVENTION

In order to address the above technical problems, a first aspect of the present application proposes an airbag cover. The airbag cover comprises: a substrate layer; and a skin layer, the skin layer being located on the outer surface of the substrate layer and being integral with the substrate layer; wherein a weakening line is constructed on the cover, a strength at the weakening line being less than a strength of other portions of the cover; the weakening line comprises at least one tear initiation section and at least one extension section connected to the tear initiation section, a strength at the tear initiation section being less than a strength at the extension section.

A second aspect of the present application proposes an airbag cover. The airbag cover comprises a substrate layer; and a skin layer, the skin layer being located on the outer surface of the substrate layer; wherein the cover is molded by two - shot injection molding, and a material of a first shot in the two-shot injection molding is used to form one of the substrate layer and the skin layer, and a material of a second shot is used to form the other of the substrate layer and the skin layer; a weakening line is constructed on the cover, a strength at the weakening line being less than a strength of other portions of the cover.

In one embodiment, the weakening line is injection-molded together with the substrate layer and/or the skin layer.

In one embodiment, the weakening line comprises at least one tear initiation section and at least one extension section connected to the tear initiation section, a strength at the tear initiation section being less than a strength at the extension section.

In one embodiment, the number of the tear initiation sections is plural, the number of the extension sections is plural, and the plurality of extension sections space the plurality of tear initiation sections apart.

In one embodiment, the weakening line comprises two first weakening lines arranged opposite to and spaced apart from each other; each first weakening line comprises a first central portion and two first lateral portions respectively located on both sides of the first central portion; the weakening line further comprises at least one second weakening line located between the two first weakening lines; the second weakening line comprises a second central portion, two end portions, and two second lateral portions; each second lateral portion connects the second central portion and a corresponding end portion, and the two end portions are respectively connected to the corresponding two first central portions. The tear initiation section comprises two first central portions, two end portions, and a second central portion; the extension section comprises two first lateral portions and two second lateral portions.

In one embodiment, the tear initiation section is configured as a first groove; the first groove extends from the inner surface of the substrate layer into the skin layer along the thickness direction of the cover, and a bottom of the first groove is spaced apart from the outer surface of the skin layer, so as to form a first residual thickness of the skin layer between the bottom of the first groove and the outer surface of the skin layer.

In one embodiment, the first residual thickness of the skin layer is between 0.1 mm and 1 mm.

In one embodiment, a width of the bottom of the first groove is greater than 0 and less than or equal to 0.2 mm.

In one embodiment, the first groove comprises: a first groove section, the first groove section penetrating the substrate layer along the thickness direction of the cover; and a second groove section, the second groove section extending from a bottom of the first groove section into the skin layer along the thickness direction of the cover, and a depth of the second groove section being less than a thickness of the skin layer; wherein an opening width of the second groove section is less than or equal to a bottom width of the first groove section.

In one embodiment, a width of an opening of the first groove section is greater than the bottom width of the first groove section; and/or the opening width of the second groove section is greater than a bottom width of the second groove section.

In one embodiment, an interface exists between the substrate layer and the skin layer; the extension section comprises a second groove, the second groove extending from the inner surface of the substrate layer into the substrate layer along the thickness direction of the cover, and a bottom of the second groove is spaced apart from the interface.

In one embodiment, the second groove is configured such that an opening width is greater than a bottom width.

In one embodiment, the tear initiation section comprises a plurality of first apertures sequentially arranged spaced apart from each other along a longitudinal direction of the tear initiation section, and a third groove connected between adjacent first apertures; the first aperture extends from the inner surface of the substrate layer into the skin layer along the thickness direction of the cover, and a bottom of the first aperture is spaced apart from the outer surface of the skin layer, so as to form a second residual thickness of the skin layer between the bottom of the first aperture and the outer surface of the skin layer; the third groove extends from the inner surface of the substrate layer into the skin layer along the thickness direction of the cover, and a bottom of the third groove is spaced apart from the outer surface of the skin layer, so as to form a third residual thickness of the skin layer between the bottom of the third groove and the outer surface of the skin layer.

In one embodiment, the third residual thickness of the skin layer is greater than the second residual thickness of the skin layer.

In one embodiment, the second residual thickness of the skin layer is between 0.1 mm and 1 mm, and the third residual thickness of the skin layer is between 0.5 mm and 1.5 mm.

In one embodiment, an area of the bottom of the first aperture is between 0.1 mm² and 0.6 mm², and a width of the bottom of the third groove is greater than 0 and less than or equal to 0.2 mm.

In one embodiment, each first aperture comprises at least two opposite first apex angles, a connecting line between the first apex angles extending along a longitudinal direction of the tear initiation section; the third groove is connected between the opposite first apex angles of two adjacent first apertures.

In one embodiment, the first aperture comprises: a first aperture section, the first aperture section penetrating the substrate layer along the thickness direction of the cover; and a second aperture section, the second aperture section extending from a bottom of the first aperture section into the skin layer along the thickness direction of the cover, and a depth of the second aperture section being less than a thickness of the skin layer; wherein an opening area of the second aperture section is less than or equal to a bottom area of the first aperture section.

In one embodiment, an area of an opening of the first aperture section is greater than the bottom area of the first aperture section; and/or the opening area of the second aperture section is greater than a bottom area of the second aperture section.

In one embodiment, a side wall of the first aperture section is configured in a stepped shape.

In one embodiment, the third groove comprises: a third groove section, the third groove section penetrating the substrate layer along the thickness direction of the cover; and a fourth groove section, the fourth groove section extending from a bottom of the third groove section into the skin layer along the thickness direction of the cover, and a depth of the fourth groove section being less than a thickness of the skin layer; wherein an opening width of the fourth groove section is less than or equal to a bottom width of the third groove section.

In one embodiment, an opening width of the third groove section is greater than the bottom width of the third groove section; and/or the opening width of the fourth groove section is greater than a bottom width of the fourth groove section.

In one embodiment, a side wall of the third groove section is a smooth side wall.

In one embodiment, the extension section further comprises a plurality of second apertures, the plurality of second apertures being sequentially arranged spaced apart from each other along a longitudinal direction of the extension section; the number of the second grooves is plural, and one second groove is connected between adjacent second apertures; the second aperture extends from the inner surface of the substrate layer into the skin layer along the thickness direction of the cover, and a bottom of the second aperture is spaced apart from the outer surface of the skin layer, so as to form a fourth residual thickness of the skin layer between the bottom of the second aperture and the outer surface of the skin layer.

In one embodiment, the fourth residual thickness of the skin layer is between 0.1 mm and 1 mm.

In one embodiment, a bottom area of the second aperture is between 0.1 mm² and 0.6 mm².

In one embodiment, each second aperture comprises at least two opposite second apex angles, a connecting line between the second apex angles extending along a longitudinal direction of the extension section; the second groove is connected between the opposite second second apex angles of two adjacent second apertures.

In one embodiment, the second aperture comprises: a third aperture section, the third aperture section penetrating the substrate layer along the thickness direction of the cover; and a fourth aperture section, the fourth aperture section extending from a bottom of the third aperture section into the skin layer along the thickness direction of the cover, and a depth of the fourth aperture section being less than a thickness of the skin layer; wherein an opening area of the fourth aperture section is less than or equal to a bottom area of the third aperture section.

In one embodiment, an area of an opening of the third aperture section is greater than the bottom area of the third aperture section; and/or the opening area of the fourth aperture section is greater than a bottom area of the fourth aperture section.

In one embodiment, the tear initiation section comprises: a fifth groove; the fifth groove extends from the inner surface of the substrate layer into an interior of the substrate layer along the thickness direction of the cover, and a bottom of the fifth groove is spaced apart from an interface between the substrate layer and the skin layer; and an inner groove of the skin layer formed at the interface; the inner groove of the skin layer extends into the skin layer along the thickness direction of the cover and is filled by the substrate layer; a bottom of the inner groove of the skin layer is spaced apart from the outer surface of the skin layer, so as to form a fifth residual thickness of the skin layer between the bottom of the inner groove of the skin layer and the outer surface of the skin layer; wherein the bottom of the inner groove of the skin layer is within a range of an orthographic projection of the fifth groove toward the skin layer and deviates from the bottom of the fifth groove.

In one embodiment, the fifth residual thickness of the skin layer is between 0.1 mm and 1.5 mm.

In one embodiment, a lateral distance between the bottom of the inner groove of the skin layer and the bottom of the fifth groove is between 0.6 mm and 1.5 mm.

In one embodiment, the fifth groove is configured such that an opening width is greater than a bottom width.

In one embodiment, the tear initiation section comprises: a seventh groove; the seventh groove extends from the inner surface of the substrate layer into an interior of the substrate layer along the thickness direction of the cover, and a bottom of the seventh groove is spaced apart from the interface between the substrate layer and the skin layer; and a thinned region of the skin layer formed in the skin layer, the thinned region of the skin layer being configured such that a thickness gradually decreases from both ends to a middle portion along a width direction of the weakening line; an orthographic projection of the seventh groove toward the skin layer is within a range of the thinned region of the skin layer.

In one embodiment, a thickness of the middle portion of the thinned region is between 0.6 mm and 1 mm.

In one embodiment, the thickness of the thinned region smoothly decreases from both ends to the middle portion along the width direction of the weakening line.

In one embodiment, the bottom of the seventh groove directly faces the middle portion of the thinned region.

In one embodiment, the seventh groove is configured such that an opening width is greater than a bottom width.

In one embodiment, the airbag cover further comprises a surface finish layer, the surface finish layer being located on the outer surface of the skin layer.

A third aspect of the present application proposes a vehicle steering wheel. The vehicle steering wheel comprises the airbag cover according to any one of the sentences described above.

The beneficial effects of the present application are as follows: according to the airbag cover of the present application, the substrate layer and the skin layer are integrally molded. In this way, when manufacturing the cover, there is no need to prepare a skin and an adhesive for coating a cover body, and thus no skin coating operation is required, which helps to reduce the manufacturing cost of the cover. In addition, both the tear initiation section and the extension section are regions of weak strength on the cover, and since the strength at the tear initiation section is less than the strength at the extension section, when the airbag is inflated and deployed, a crack is first generated at the tear initiation section under the impact of the airbag, and the crack quickly extends along the extension section, thereby tearing open the cover so that the airbag can pop out rapidly. Furthermore, the cover tears open along a predetermined trajectory (i.e., the weakening line). This makes the tearing manner of the cover controllable and avoids the generation of flying debris, thereby helping to improve the safety of the cover.

### BRIEF DESCRIPTION OF THE DRAWINGS

The present application will be further described below by way of non-limiting embodiments with reference to the accompanying drawings, which are not drawn to scale.
- Fig. 1: schematically shows an airbag cover according to an embodiment of the present application.
- Fig. 2: schematically shows a substrate layer and a skin layer of the airbag cover.
- Fig. 3: schematically shows a weakening line of a first embodiment.
- Fig. 4: schematically shows a tear initiation section of the weakening line of the first embodiment.
- Fig. 5: is a cross-sectional view of the tear initiation section shown in Fig. 4.
- Fig. 6: schematically shows an extension section of the weakening line of the first embodiment.
- Fig. 7: is a cross-sectional view of the extension section shown in Fig. 6.
- Fig. 8: schematically shows a weakening line of a second embodiment.
- Fig. 9: is a partial enlarged view of a tear initiation section of the weakening line shown in Fig. 8.
- Fig. 10: is a cross-sectional view of a first aperture in the tear initiation section shown in Fig. 9.
- Fig. 11: is a cross-sectional view of a third groove in the tear initiation section shown in Fig. 9.
- Fig. 12: is an enlarged partial view of an extension section of the weakening line shown in Fig. 8.
- Fig. 13: is a cross-sectional view of a second aperture in the extension section shown in Fig. 12.
- Fig. 14: is a cross-sectional view of a second groove in the extension section shown in Fig. 12.
- Fig. 15: schematically shows a weakening line of a third embodiment.
- Fig. 16: schematically shows a cross-sectional view of a tear initiation section of the weakening line of the third embodiment.
- Fig. 17: schematically shows a cross-sectional view of an extension section of the weakening line of the third embodiment.
- Fig. 18: schematically shows a weakening line of a fourth embodiment.
- Fig. 19: schematically shows a cross-sectional view of a tear initiation section of the weakening line of the fourth embodiment.
- Fig. 20: schematically shows a cross-sectional view of an extension section of the weakening line of the fourth embodiment.

| **REFERENCE SYMBOL** | **ELEMENT, PART OR COMPONENT** |
|---|---|
| 1 | Airbag cover |
| 11 | Substrate layer |
| 111 | Inner surface of the substrate layer |
| 12 | Skin layer |
| 121 | Outer surface of the skin layer |
| 13 | Interface |
| 14 | Emblem |
| 2 | Weakening line |
| 201 | First weakening line |
| 202 | Second weakening line |
| 203 | First central portion |
| 204 | First lateral portion |
| 205 | Second central portion |
| 206 | End portion |
| 207 | Second lateral portion |
| 3 | Tear initiation section |
| 31 | First groove |
| 313 | Bottom of first groove |
| 311 | First groove section |
| 3111 | Opening of first groove section |
| 3112 | Bottom of first groove section |
| 312 | Second groove section |
| 3121 | Opening of second groove section |
| 321 | First aperture |
| 3211 | First aperture section |
| 3212 | Second aperture section |
| 3213 | Bottom of first aperture section |
| 3214 | Opening of second aperture section |
| 3216 | Opening of first aperture |
| 3217 | Bottom of first aperture |
| 3218 | First apex angle |
| 3219 | Side wall of first aperture |
| 323 | Third groove |
| 3231 | Opening of third groove |
| 3232 | Bottom of third groove |
| 3233 | Third groove section |
| 3234 | Fourth groove section |
| 3235 | Bottom of third groove section |
| 3236 | Opening of fourth groove section |
| 3237 | Side wall of third groove section |
| 331 | Fifth groove |
| 3311 | Opening of fifth groove |
| 3312 | Bottom of fifth groove |
| 332 | inner groove of the skin layer |
| 3321 | Bottom of the internal groove of the skin layer |
| 333 | Connecting portion between the bottom of the fifth groove and the bottom of the internal groove of the skin layer |
| 341 | Seventh groove |
| 3411 | Opening of seventh groove |
| 3412 | Bottom of seventh groove |
| 342 | Thinned region of the skin layer |
| 3421 | Middle portion of the thinned region |
| 3422 | Both ends of the thinned region |
| 4 | Extension section |
| 411 | Second groove |
| 4111 | Opening of second groove |
| 4112 | Bottom of second groove |
| 421 | Second aperture |
| 4211 | Third aperture section |
| 4212 | Fourth aperture section |
| 4213 | Bottom of third aperture section |
| 4214 | Opening of fourth aperture section |
| 4216 | Opening of second aperture |
| 4217 | Bottom of second aperture |
| 4218 | Second apex angle |
| L | Thickness of the skin layer |
| L1 | First residual thickness of the skin layer |
| L2 | Second residual thickness of the skin layer |
| L3 | Third residual thickness of the skin layer |
| L4 | Fourth residual thickness of the skin layer |
| L5 | Fifth residual thickness of the skin layer |
| L6 | Lateral distance between the bottom of the internal groove of the skin layer and the bottom of the fifth groove |
| S | Thickness of the substrate layer |
| S1 | First residual thickness of the substrate layer |
| S2 | Second residual thickness of the substrate layer |
| S3 | Third residual thickness of the substrate layer |
| S4 | Fourth residual thickness of the substrate layer |
| S5 | Fifth residual thickness of the substrate layer |
| S6 | Sixth residual thickness of the substrate layer |
| A | Thickness direction of the cover |
| W | Lateral direction |

### DETAILED DESCRIPTION

The details introduced herein are exemplary and are only used for illustrative discussion of the embodiments of the present application, and their existence is to provide what is considered to be the most useful and easily understood description of the principles and conceptual aspects of the present application. In this regard, no attempt is made to introduce structural details of the present application to an extent beyond what is required for a basic understanding of the present application, and those skilled in the art can clearly understand how to practice several forms of the present application through the description and the drawings thereof.

In the present application, the term "outer" refers to a direction pointing toward an interior of a vehicle, and the term "inner" refers to a direction opposite to "outer". In other words, a passenger or a driver can see the outer surface of the cover (or the skin layer) but cannot see the inner surface of the cover (or the substrate layer).

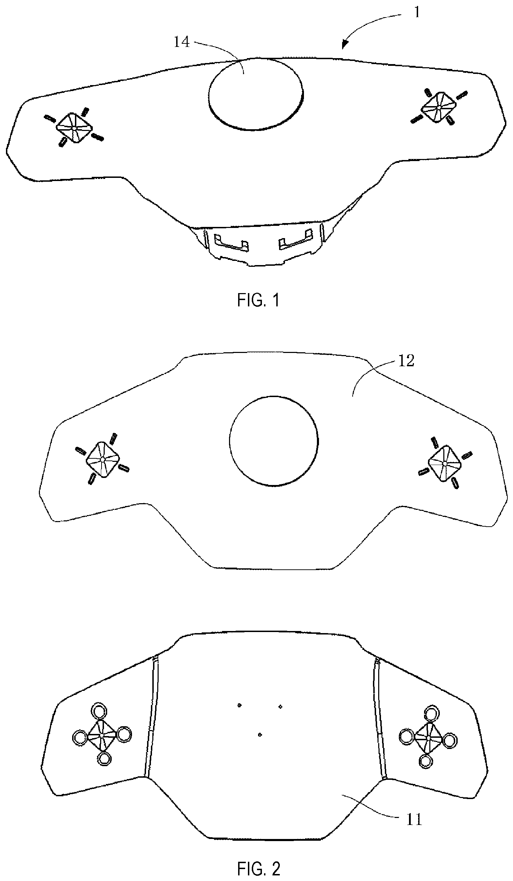

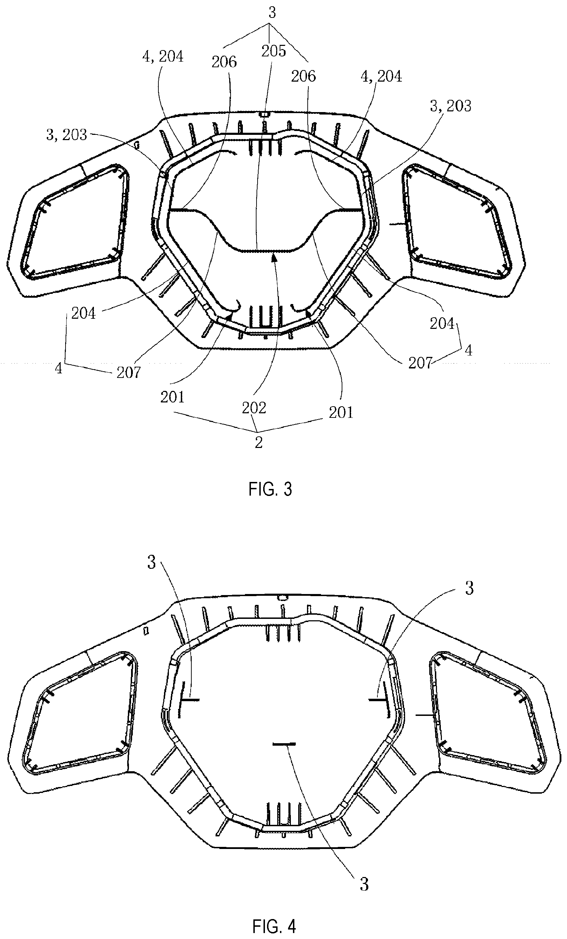

Fig. 1 schematically shows an airbag cover 1 according to an embodiment of the present application (for simplicity, hereinafter simply referred to as the cover 1). As shown in Fig. 1 and Fig. 2, the cover 1 comprises a substrate layer 11 and a skin layer 12. The skin layer 12 is located on the outer surface of the substrate layer 11 and is integral with the substrate layer 11. As shown in Fig. 3, a weakening line 2 is constructed on the cover 1. A strength at the weakening line 2 is less than a strength of other portions of the cover 1. The weakening line 2 comprises at least one tear initiation section 3 and at least one extension section 4. The extension section 4 is connected to the tear initiation section 3, and a strength at the tear initiation section 3 is less than a strength at the extension section 4.

According to the cover 1 of the present application, the substrate layer 11 and the skin layer 12 are integral. When manufacturing the cover 1, there is no need to prepare a skin and an adhesive for coating a cover body as in the prior art, and thus there is no need for a skin coating operation as in the prior art. This helps to reduce the manufacturing cost of the cover 1.

In addition, when an airbag (not shown in the figures) is inflated and deployed, a crack is first generated at the tear initiation section 3 of the cover 1 under the impact of the airbag, and then the crack quickly extends along the extension section 4, causing the cover 1 to tear open along the weakening line 2, whereby the airbag can pop out rapidly. In other words, the cover 1 tears open along a predetermined trajectory (i.e., the weakening line 2) under the impact of the airbag. This makes the tearing manner of the cover 1 controllable and avoids the generation of flying debris, thereby helping to improve the safety of the cover 1.

In one embodiment, the weakening line 2 deviates from the emblem 14 on the cover 1 to avoid danger caused by the emblem 14 flying off when the cover 1 tears open.

The shape of the cover 1 shown in Fig. 1 is adapted to a vehicle steering wheel (not shown in the figures) so as to be suitable for installation on the vehicle steering wheel. It should be understood that the airbag cover 1 can also be configured in other shapes so as to be suitable for installation at other positions of the vehicle, for example, used as an instrument panel or the like. For simplicity, the technical solution of the present application is described below by taking the cover 1 suitable for installation on a steering wheel as an example.

Optionally, the cover 1 is molded by two-shot injection molding. In this way, the substrate layer 11 and the skin layer 12 are well bonded together. When the cover 1 tears open, the substrate layer 11 and the skin layer 12 tear open simultaneously without delamination, which further helps to avoid the generation of flying debris, thereby improving the safety of the cover 1.

In one embodiment, during the two-shot injection molding process, a material used for a first shot is used to form one of the substrate layer 11 and the skin layer 12, and a material used for a second shot is used to form the other of the substrate layer 11 and the skin layer 12. For example, the material used for the first shot is TPEE (thermoplastic polyester elastomer), which is used for molding the substrate layer 11. The material used for the second shot may also be TPEE, which is used to form the skin layer 12 on the substrate layer 11. The two-shot injection molding process is simpler and requires less time than the coating process in the prior art, which helps to further reduce the manufacturing cost of the cover 1 and improve the production efficiency of the cover 1. In other embodiments, other materials may also be used to manufacture the cover 1 according to actual conditions, such as using TPE (thermoplastic elastomer) or TPO (thermoplastic polyolefin) or the like. It should be understood that those skilled in the art can also mold the cover 1 by other methods, which will not be repeated here.

In one embodiment, a structure for molding the weakening line 2 is configured on an injection mold (not shown in the figures). In this way, when injection molding the cover 1, the weakening line 2 is molded simultaneously, which is easily achieved by those skilled in the art and will not be repeated here. Of course, cold knife weakening or laser weakening in the prior art may also be used to mold the weakening line 2 on the cover 1 as required. Both cold knife weakening and laser weakening are well known to those skilled in the art, and will not be repeated here either.

In one embodiment, the substrate layer 11 may have a larger thickness and higher strength to serve as a support structure for the cover 1. Generally, the thickness S of the substrate layer 11 is greater than the thickness L of the skin layer 12. For example, the thickness S of the substrate layer 11 may be between 1 mm and 5 mm; the thickness L of the skin layer 12 is between 0.5 mm and 3 mm. Of course, the thickness of the substrate layer 11 and the thickness of the skin layer 12 may also be in other numerical ranges, which is not limited here.

The structure of the weakening line 2 on the cover 1 will be described below.

### Weakening Line of the First Embodiment

As also shown in Fig. 3, the weakening line 2 comprises two first weakening lines 201 arranged opposite to and spaced apart from each other, and a second weakening line 202 connected between the two first weakening lines 201. The two first weakening lines 201 are not connected to each other. Specifically, each first weakening line 201 comprises a first central portion 203 and two first lateral portions 204 located on both sides of the first central portion 203. The second weakening line 202 comprises a second central portion 205, two end portions 206, and two second lateral portions 207. The second lateral portion 207 is connected between the second central portion 205 and a corresponding end portion 206, and the two end portions 206 are respectively connected to the corresponding two first central portions 203. In this structure, the tear initiation section 3 comprises two first central portions 203, two end portions 206, and the second central portion 205; the extension section 4 comprises two first lateral portions 204 and two second lateral portions 207. Thereby, a tear initiation section 3 is configured in the middle of both the first weakening line 201 and the second weakening line 202. When the cover 1 receives the impact of the airbag, cracks are generated in these weakening lines almost simultaneously and these cracks quickly extend along the corresponding weakening lines, thereby further accelerating the tearing speed of the cover 1 so that the airbag can pop out even faster.

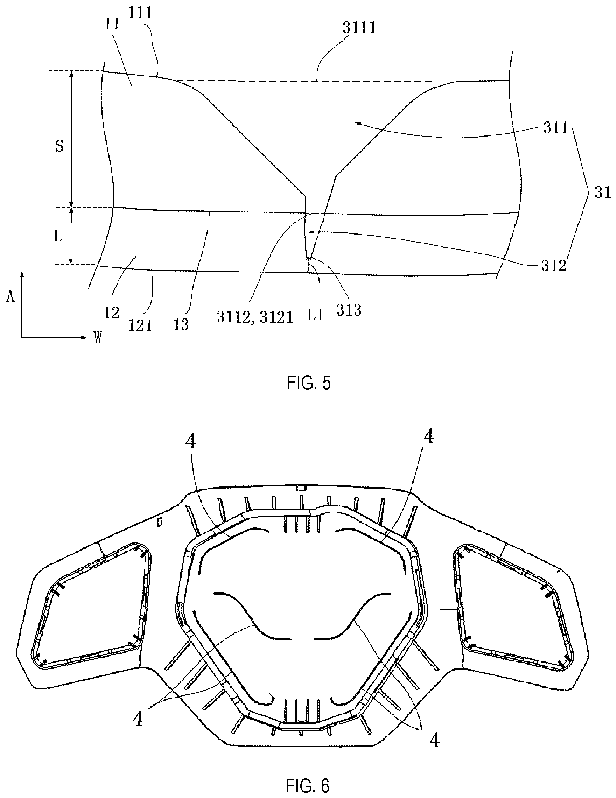

Optionally, as shown in Fig. 4 and Fig. 5, the tear initiation section 3 is configured as a first groove 31. The first groove 31 extends from the inner surface 111 of the substrate layer 11 into the skin layer 12 along the thickness direction A of the cover 1. A bottom 313 of the first groove 31 is spaced apart from the outer surface 121 of the skin layer 12, so that a first residual thickness of the skin layer L1 is formed between the bottom 313 of the first groove and the outer surface 121 of the skin layer 12. Viewed as a whole, the substrate layer 11 is penetrated through, and the thickness of the corresponding portion of the skin layer 12 is also reduced, which makes the strength at the tear initiation section 3 smaller. Viewed as a whole, the tear initiation section 3 forms a region of weak strength of the cover 1. Thereby, when the cover 1 receives the impact of the airbag, cracks are easily generated at the tear initiation section 3. In addition, viewed from the entirety of the cover 1, the skin layer 12 remains complete, which helps to improve the aesthetics of the cover 1.

Optionally, the first residual thickness of the skin layer L1 is between 0.1 mm and 1 mm. In this way, the first residual thickness of the skin layer L1 is small and the strength is also weak, making it easy to tear. In addition, it has also been found that even after the skin layer 12 ages due to long-term high temperature and/or sun baking, the first residual thickness of the skin layer L1 of this size does not cause a depression (i.e., a weakening mark) corresponding to the first groove 31 on the outer surface of the skin layer 12, which helps to further improve the aesthetics of the cover 1. In a preferred embodiment, the first residual thickness of the skin layer L1 may be between 0.2 mm and 0.8 mm. Of course, the first residual thickness of the skin layer L1 may also be configured to other numerical values according to actual conditions, which is not limited here.

Optionally, the width of the bottom 313 of the first groove 31 is greater than 0 and less than or equal to 0.2 mm. In this way, the width of the bottom 313 of the first groove 31 is small. After the skin layer 12 ages, a weakening mark corresponding to the first groove 31 is also not easily generated on the skin layer 12 or the weakening mark is not easily observed, thereby helping to further improve the aesthetics of the cover 1.

Optionally, as also shown in Fig. 5, the first groove 31 comprises a first groove section 311 and a second groove section 312. The first groove section 311 penetrates the substrate layer 11 along the thickness direction A of the cover 1. In this way, the first groove section 311 has an opening 3111 located at the inner surface 111 of the substrate layer 11 and a bottom 3112 located at the interface 13 between the substrate layer 11 and the skin layer 12. The second groove section 312 extends from the bottom 3112 of the first groove section 311 into the skin layer 12 along the thickness direction A of the cover 1. The depth of the second groove section 312 is less than the thickness L of the skin layer 12 so as to form the aforementioned first residual thickness of the skin layer L1. The second groove section 312 has an opening 3121 located at the interface 13. The bottom 313 of the first groove 31 forms the bottom of the second groove section 312. The width of the opening 3121 of the second groove section 312 is equal to the width of the bottom 3112 of the first groove section 311. In this way, along the thickness direction A of the cover 1, the first groove is continuous, which facilitates simultaneously molding the first groove when injection molding the cover 1. In one embodiment, the width of the opening 3121 of the second groove section 312 may also be less than the width of the bottom 3112 of the first groove section 311.

Optionally, as also shown in Fig. 5, the width of the opening 3111 of the first groove section 311 is greater than the width of the bottom 3112 of the first groove section 311. Viewed as a whole, the cross-section of the first groove section 311 is substantially trapezoidal. According to this structure, the thickness variation of the substrate layer 11 at the first groove section 311 is relatively gentle. During injection molding, the region around the first groove section 311 is less prone to injection molding defects, which helps to ensure that the quality of the skin layer 12 molded on the substrate layer 11 and the shape of the outer surface 121 of the skin layer 12 are also good, which helps to improve the aesthetics of the cover 1. In one embodiment, the cross-section of the first groove section 311 may also be of other suitable shapes. The same applies to the second groove section 312, and will not be repeated here.

In one embodiment, the width of the opening 3111 of the first groove section 311 is between 7 mm and 10 mm; the width of the bottom 3112 of the first groove section 311 is between 0.4 mm and 0.7 mm. The width of the opening 3121 of the second groove section 312 is between 0.4 mm and 0.7 mm. The first groove section 311 and the second groove section 312 of such dimensions are also easy to injection mold.

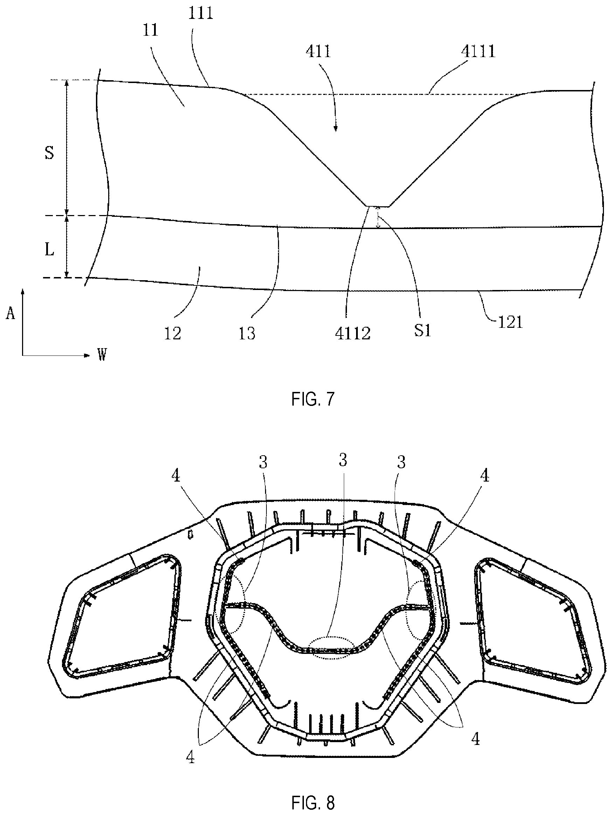

Optionally, as shown in Fig. 6 and Fig. 7, the extension section 4 is configured as a second groove 411. The second groove 411 extends from the inner surface 111 of the substrate layer 11 into the substrate layer 11 along the thickness direction A of the cover 1. In this way, the second groove 411 has an opening 4111 located on the inner surface 111 of the substrate layer 11 and a bottom 4112 located within the substrate layer 11. The bottom 4112 of the second groove 411 is spaced apart from the interface 13 between the substrate layer 11 and the skin layer 12, thereby forming a first residual thickness of the substrate layer S1 between the bottom 4112 of the second groove 411 and the interface 13. Viewed as a whole, the thickness at the second groove 411 (or the extension section 4) is also thin and the strength is small, which also forms a weak region of the cover 1. When the cover 1 receives the impact of the airbag, the crack generated at the tear initiation section 3 will quickly extend along the extension section 4, ultimately causing the cover 1 to tear open. It should be noted that the second groove 411 (or the extension section 4) does not penetrate through the substrate layer 11, and therefore the strength at the second groove 411 (or the extension section 4) is greater than the strength at the tear initiation section 3.

In addition, since the substrate layer 11 is not penetrated by the second groove 411 at the extension section 4, the portion of the skin layer 12 corresponding to the extension section 4 receives good support from the substrate layer 11. When the skin layer 12 ages, a weakening mark corresponding to the second groove 411 (or the extension section 4) is also not easily generated on the outer surface 121 of the skin layer 12, thereby helping to improve the aesthetics of the cover 1. In addition, the extension sections 4 space these tear initiation sections 3 apart. In this way, viewed from the entirety of the cover 1, the substrate layer 11 is penetrated only at several tear initiation sections 3 separated from each other. This helps to prevent the overall strength of the cover 1 from being too small, thereby avoiding accidental damage to the cover 1.

In one embodiment, the first residual thickness of the substrate layer S1 is between 0.1 mm and 1 mm. In a preferred embodiment, the first residual thickness of the substrate layer S1 is between 0.2 mm and 0.8 mm.

Optionally, as also shown in Fig. 7, the width of the opening 4111 of the second groove 411 is greater than the width of the bottom 4112 of the second groove 411. Viewed as a whole, the cross-section of the second groove 411 is substantially V-shaped. Similar to the first groove section 311 of the first groove 31, during injection molding, the region around the second groove 411 is less prone to injection molding defects, which helps to ensure that the quality of the skin layer 12 molded on the substrate layer 11 and the shape of the outer surface 121 of the skin layer 12 are also good, thereby helping to improve the aesthetics of the cover 1. In one embodiment, the cross-section of the second groove 411 may also be trapezoidal or of another suitable shape. In one embodiment, the width of the opening 4111 of the second groove 411 is between 6 mm and 10 mm, and the width of the bottom 4112 is between 0.4 mm and 0.7 mm.

### Weakening Line of the Second Embodiment

As shown in Fig. 8 and Fig. 3, the weakening line of the second embodiment is overall similar to the weakening line of the first embodiment, and only the differences between the two will be described below.

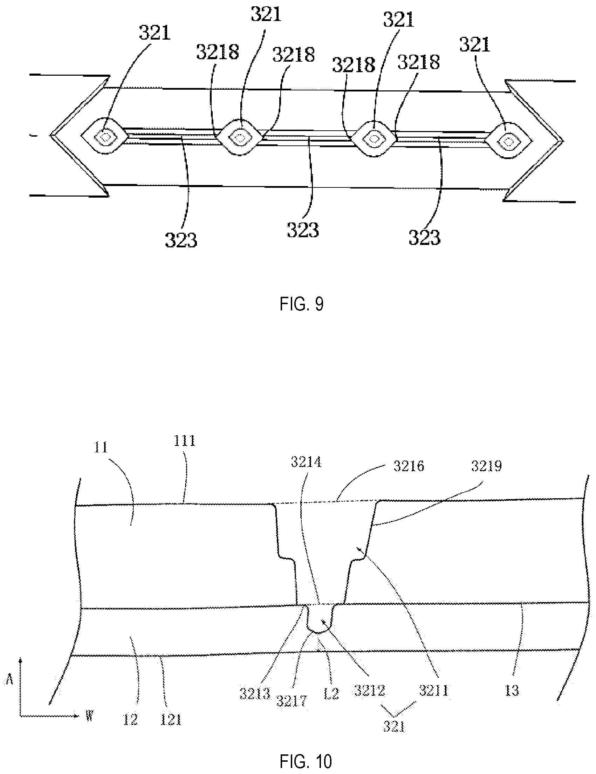

As shown in Fig. 9, the tear initiation section 3 comprises a plurality of first apertures 321, and these first apertures 321 are sequentially arranged spaced apart from each other along a longitudinal direction of the tear initiation section 3. The tear initiation section 3 further comprises a third groove 323 connected between adjacent first apertures 321. In the present application, the longitudinal direction of the tear initiation section 3 refers to a direction substantially parallel to a length direction of the tear initiation section.

As shown in Fig. 10, the first aperture 321 extends from the inner surface 111 of the substrate layer 11 into the skin layer 12 along the thickness direction A of the cover 1. In this way, the first aperture 321 has an opening 3216 located in the inner surface 111 of the substrate layer 11 and a bottom 3217 located within the skin layer 12. The bottom 3217 of the first aperture 321 is spaced apart from the outer surface 121 of the skin layer 12, thereby forming a second residual thickness of the skin layer L2 between the bottom 3217 of the first aperture 321 and the outer surface 121 of the skin layer 12.

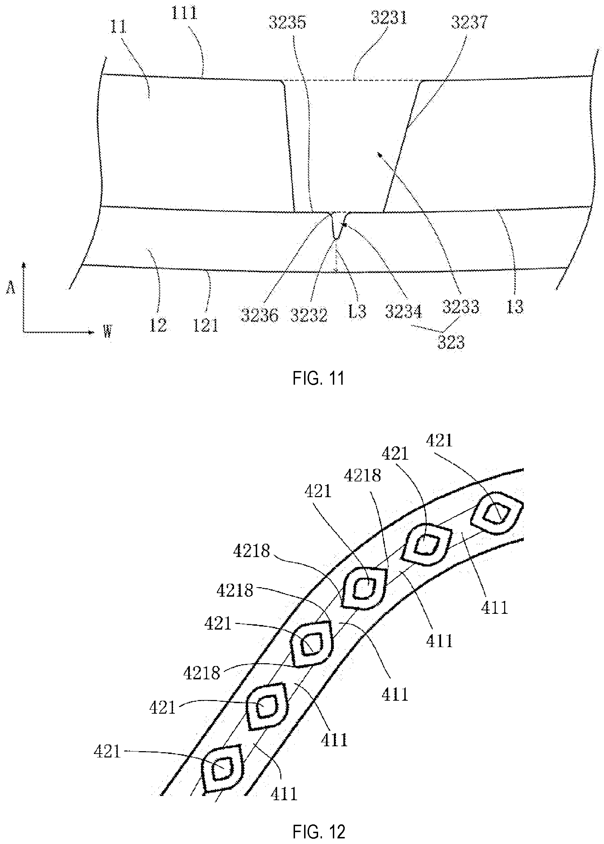

As shown in Fig. 11, the third groove 323 extends from the inner surface 111 of the substrate layer 11 into the skin layer 12 along the thickness direction A of the cover 1. In this way, the third groove 323 has an opening 3231 located in the inner surface 111 of the substrate layer 11 and a bottom 3232 located within the skin layer 12. The bottom 3232 of the third groove 323 is spaced apart from the outer surface 121 of the skin layer 12, thereby forming a third residual thickness of the skin layer L3 between the bottom 3232 of the third groove 323 and the outer surface 121 of the skin layer 12.

Viewed from the entirety of the cover 1, in the entire tear initiation section 3, the substrate layer 11 is penetrated through, and the thickness of the corresponding portion of the skin layer 12 is also reduced, which makes the strength at the tear initiation section 3 smaller. When the cover 1 receives the impact of the airbag, cracks are easily generated at the tear initiation section 3. In addition, viewed from the entirety of the cover 1, the outer surface 121 of the skin layer 12 remains complete, which helps to improve the aesthetics of the cover 1.

Optionally, the third residual thickness of the skin layer L3 is greater than the second residual thickness of the skin layer L2. Therefore, the strength of the portion of the skin layer 12 corresponding to the third groove 323 is greater than the strength of the portion of the skin layer 12 corresponding to the first aperture 321. In this way, when the skin layer 12 ages, the portion of the skin layer 12 corresponding to the third groove 323 will pull the portion of the skin layer 12 corresponding to the first aperture 321, so that a weakening mark corresponding to the tear initiation section 3 is not easily generated on the outer surface 121 of the skin layer 12 or the weakening mark is not easily observed, thereby improving the appearance quality of the cover 1. In one embodiment, the second residual thickness of the skin layer L2 is between 0.1 mm and 1 mm, preferably between 0.2 mm and 0.8 mm; the third residual thickness of the skin layer L3 is between 0.5 mm and 1.5 mm, preferably between 0.6 mm and 1.0 mm.

Optionally, an area of the bottom 3217 of the first aperture 321 is between 0.1 mm² and 0.6 mm². A width of the bottom 3232 of the third groove 323 is greater than 0 and less than or equal to 0.2 mm. In this way, the area of the bottom 3217 of the first aperture 321 is small, and the width of the bottom 3232 of the third groove 323 is also small. After the skin layer 12 ages, a weakening mark corresponding to the first aperture 321 and the third groove 323 is also not easily generated on the outer surface 121 of the skin layer 12 or the weakening mark is not easily observed, thereby helping to further improve the aesthetics of the cover 1.

Optionally, as also shown in Fig. 9, each first aperture 321 comprises at least two opposite first apex angles 3218, and a connecting line between these first apex angles 3218 extends along the longitudinal direction of the tear initiation section 3. The third groove 323 is connected between the opposite first apex angles 3218 of two adjacent first apertures 321. Viewed as a whole, the first apex angle 3218 is sharper than other portions of the first aperture 321. When the cover 1 receives the impact of the airbag, a larger stress concentration will be generated at the first apex angle 3218 of the first aperture 321, so that cracks are more easily and rapidly generated at the first apex angle 3218. In one embodiment, the first aperture 321 may be substantially diamond-shaped, and of course may also be of other shapes, such as an elliptical shape or the like.

Optionally, as shown in Fig. 10, the first aperture 321 comprises a first aperture section 3211 and a second aperture section 3212. The first aperture section 3211 penetrates the substrate layer 11 along the thickness direction A of the cover 1. In this way, the first aperture section 3211 has a bottom 3213 located at the interface 13 between the substrate layer 11 and the skin layer 12, and the opening 3216 of the first aperture 321 forms an opening of the first aperture section 3211. The second aperture section 3212 extends from the bottom 3213 of the first aperture section 3211 into the skin layer 12 along the thickness direction A of the cover 1. In this way, the second aperture section 3212 has an opening 3214 located at the interface 13 between the substrate layer 11 and the skin layer 12, and the bottom 3217 of the first aperture forms a bottom of the second aperture section 3212. The depth of the second aperture section 3212 is less than the thickness L of the skin layer 12 so as to form the aforementioned second residual thickness of the skin layer L2. In addition, an area of the opening 3214 of the second aperture section 3212 is less than or equal to an area of the bottom 3213 of the first aperture section 3211. In this way, viewed as a whole, the first aperture 321 is continuous, which facilitates simultaneously molding the first aperture 321 when injection molding the cover 1.

Optionally, as also shown in Fig. 10, the first aperture section 3211 is configured such that an area of its opening is greater than the area of its bottom 3213. In this way, the thickness variation of the substrate layer 11 at the first aperture section 3211 is relatively gentle. During injection molding, the region around the first aperture section 3211 is less prone to injection molding defects, which helps to ensure that the quality of the skin layer 12 molded on the substrate layer 11 and the shape of the outer surface 121 of the skin layer 12 are also good, which helps to improve the aesthetics of the cover 1. In a specific embodiment, a side wall 3219 of the first aperture section 3211 is formed in a stepped shape (the entire first aperture section 3211 forms a stepped hole) (as shown in Fig. 10), and may also be configured in other suitable shapes. The same applies to the second aperture section 3212, and will not be repeated here.

In a specific embodiment, the area of the opening of the first aperture section 3211 (i.e., the opening 3216 of the first aperture) is between 1.5 mm² and 2.2 mm², and the area of the bottom 3213 of the first aperture section 3211 is between 0.4 mm² and 0.6 mm². The area of the opening 3214 of the second aperture section 3212 is between 0.4 mm² and 0.6 mm². The first aperture section 3211 and the second aperture section 3212 of such dimensions facilitate injection molding. Of course, the respective opening area and bottom area of the first aperture section 3211 and the second aperture section 3212 may also be set to other numerical values according to actual conditions, which is not limited here.

Optionally, as shown in Fig. 11, the third groove 323 comprises a third groove section 3233 and a fourth groove section 3234. The third groove section 3233 penetrates the substrate layer 11 along the thickness direction A of the cover 1. In this way, the third groove section 3233 has a bottom 3235 located at the interface 13 between the substrate layer 11 and the skin layer 12, and the opening 3231 of the third groove forms an opening of the third groove section 3233. The fourth groove section 3234 extends from the bottom 3235 of the third groove section 3233 into the skin layer 12 along the thickness direction A of the cover 1. In this way, the fourth groove section 3234 has an opening 3236 located at the interface 13, and the bottom 3232 of the third groove forms a bottom of the fourth groove section 3234. The depth of the fourth groove section 3234 is less than the thickness L of the skin layer 12 so as to form the aforementioned third residual thickness of the skin layer L3. In addition, a width of the opening 3236 of the fourth groove section 3234 is less than or equal to a width of the bottom 3235 of the third groove section 3233. In this way, viewed as a whole, the third groove 323 is continuous, which facilitates simultaneously molding the third groove 323 when injection molding the cover 1.

Optionally, as also shown in Fig. 11, the third groove section 3233 is configured such that a width of its opening is greater than the width of its bottom 3235. Similar to the second groove 411, during injection molding, the region around the third groove section 3233 is less prone to injection molding defects, which ensures that the quality of the skin layer 12 molded on the substrate layer 11 and the shape of the outer surface 121 of the skin layer 12 are also good, which helps to improve the aesthetics of the cover 1. In one embodiment, the cross-section of the third groove section 3233 is substantially trapezoidal, and of course may also be of other suitable shapes. The same applies to the fourth groove section 3234, and will not be repeated here.

In a specific embodiment, the width of the opening of the third groove section 3233 (i.e., the opening 3231 of the third groove) is between 3 mm and 5 mm, and the width of the bottom 3235 of the third groove section 3233 is between 2 mm and 3 mm. The width of the opening 3236 of the fourth groove section 3234 is between 0.2 mm and 0.5 mm. The third groove section 3233 and the fourth groove section 3234 of such dimensions also facilitate injection molding. Of course, the respective opening width and bottom width of the third groove section 3233 and the fourth groove section 3234 may also be set to other numerical values according to actual conditions, which is not limited here.

Optionally, as also shown in Fig. 11, a side wall 3237 of the third groove section 3233 is a smooth side wall. In this way, the shape of the side wall 3219 of the first aperture section 3211 and the shape of the side wall 3237 of the third groove section 3233 are different. During the injection molding process, this helps to avoid the accumulation of injection molding defects of the third groove section 3233 and the first aperture section 3211. Thereby, the quality of the skin layer 12 molded on the substrate layer 11 and the shape of the outer surface 121 of the skin layer 12 are also good, which helps to improve the aesthetics of the cover 1.

Optionally, as shown in Fig. 12, the extension section 4 comprises a plurality of second apertures 421 and a plurality of sections of the second groove 411. These second apertures 421 are sequentially arranged spaced apart from each other along a longitudinal direction of the extension section 4, and one second groove 411 is connected between adjacent second apertures 421. In the present application, the longitudinal direction of the extension section 4 refers to a direction substantially parallel to a length direction of the extension section.

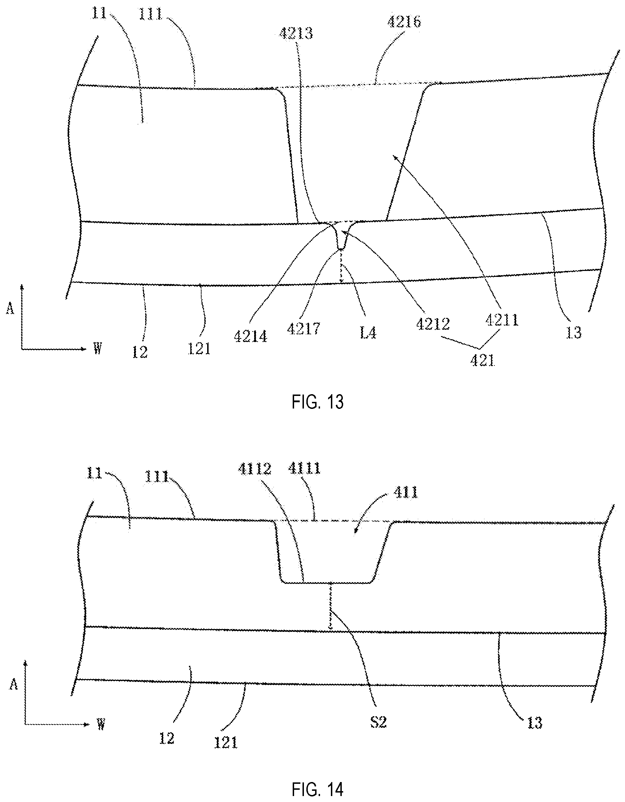

As shown in Fig. 13, the second aperture 421 extends from the inner surface 111 of the substrate layer 11 into the skin layer 12 along the thickness direction A of the cover 1. In this way, the second aperture 421 has an opening 4216 located in the inner surface 111 of the substrate layer 11 and a bottom 4217 located within the skin layer 12. The bottom 4217 of the second aperture 421 is spaced apart from the outer surface 121 of the skin layer 12, thereby forming a fourth residual thickness of the skin layer L4 between the bottom 4217 of the second aperture 421 and the outer surface 121 of the skin layer 12.

As shown in Fig. 14, the second groove 411 extends from the inner surface 111 of the substrate layer 11 into the substrate layer 11 along the thickness direction A of the cover 1. In this way, the second groove 411 has an opening 4111 located in the inner surface 111 of the substrate layer 11 and a bottom 4112 located within the substrate layer 11. The bottom 4112 of the second groove 411 is spaced apart from the interface 13 between the substrate layer 11 and the skin layer 12, thereby forming a second residual thickness of the substrate layer S2 between the bottom 4112 of the second groove 411 and the interface 13.

Viewed from the entirety of the cover 1, along the extension section 4, the second apertures 421 penetrate through the substrate layer 11, and the second grooves 411 also thin the thickness of the substrate layer 11, and therefore the strength at the extension section 4 is also small. When the cover 1 receives the impact of the airbag, a crack formed at the tear initiation section 3 will quickly extend along the extension section 4, thereby causing the cover 1 to tear open rapidly along the weakening line 2. It should be noted that since the second groove 411 does not penetrate through the substrate layer 11, the strength at the extension section 4 is greater than the strength at the tear initiation section 3. In addition, these second apertures 421 are spaced apart by the second grooves 411, so that the substrate layer 11 still maintains a relatively complete structure at the extension section 4, which helps to prevent the overall strength of the cover 1 from being too small to avoid accidental damage to the cover 1; moreover, the supporting effect of the substrate layer 11 on the skin layer 12 is also good, so that a weakening mark corresponding to the extension section 4 is not easily generated on the outer surface 121 of the skin layer 12. In one embodiment, the fourth residual thickness of the skin layer L4 is between 0.1 mm and 1 mm, preferably between 0.4 mm and 0.8 mm; the second residual thickness of the substrate layer S2 is between 1 mm and 2 mm, preferably between 1.3 mm and 1.8 mm.

Optionally, an area of the bottom 4217 of the second aperture 421 is between 0.1 mm² and 0.6 mm². In this way, the area of the bottom 4217 of the second aperture 421 is small. After the skin layer 12 ages, a weakening mark corresponding to the second aperture 421 is also not easily generated on the outer surface 121 of the skin layer 12 or the weakening mark is not easily observed, thereby helping to further improve the aesthetics of the cover 1.

Optionally, as also shown in Fig. 12, each second aperture 421 comprises at least two opposite second apex angles 4218, and a connecting line between these second apex angles 4218 extends along a longitudinal direction of the extension section 4. The second groove 411 is connected between the opposite second apex angles 4218 of two adjacent second apertures 421. Similar to the first aperture 321 of the tear initiation section 3, when the cover 1 receives the impact of the airbag, a larger stress concentration will also be generated at the second apex angle 4218 of the second aperture 421. This helps the crack to quickly extend along the extension section 4, thereby causing the cover 1 to tear open rapidly. In one embodiment, the second aperture 421 may be substantially diamond-shaped, and of course may also be of other shapes, such as an elliptical shape or the like.

In addition, viewed from the entirety of the weakening line 2, both the first apertures 321 and the second apertures 421 are distributed along a longitudinal direction of the weakening line 2, and the connecting line of the first apex angles 3218 and the connecting line of the second apex angles 4218 also extend along the longitudinal direction of the corresponding weakening line 2. In this way, when the cover 1 receives the impact of the airbag, the cover 1 tears open along a predetermined trajectory (i.e., the weakening line 2), making the tearing manner of the cover 1 controllable and helping to avoid the generation of flying debris.

Optionally, as shown in Fig. 13, the second aperture 421 comprises a third aperture section 4211 and a fourth aperture section 4212. The third aperture section 4211 penetrates the substrate layer 11 along the thickness direction A of the cover 1. In this way, the third aperture section 4211 has a bottom 4213 located at the interface 13 between the substrate layer 11 and the skin layer 12, and the opening 4216 of the second aperture forms an opening of the third aperture section 4211. The fourth aperture section 4212 extends from the bottom 4213 of the third aperture section 4211 into the skin layer 12 along the thickness direction A of the cover 1. In this way, the fourth aperture section 4212 has an opening 4214 located at the interface 13 between the substrate layer 11 and the skin layer 12, and the bottom 4217 of the second aperture forms a bottom of the fourth aperture section 4212. The depth of the fourth aperture section 4212 is less than the thickness L of the skin layer 12 so as to form the aforementioned fourth residual thickness of the skin layer L4. In addition, an area of the opening 4214 of the fourth aperture section 4212 is less than or equal to an area of the bottom 4213 of the third aperture section 4211. In this way, viewed as a whole, the second aperture 421 is continuous, which facilitates simultaneously molding the second aperture 421 when injection molding the cover 1.

Optionally, as also shown in Fig. 13, similar to the first aperture section 3211, the third aperture section 4211 is configured such that an area of its opening is greater than the area of its bottom 4213. In this way, during injection molding, the region around the third aperture section 4211 is less prone to injection molding defects, which ensures that the quality of the skin layer 12 molded on the substrate layer 11 and the shape of the outer surface 121 of the skin layer 12 are also good, which helps to improve the aesthetics of the cover 1. The same applies to the fourth aperture section 4212, and will not be repeated here.

In a specific embodiment, the area of the opening of the third aperture section 4211 (i.e., the opening 4216 of the second aperture 421) is between 1.5 mm² and 2.2 mm², and the area of the bottom 4213 of the third aperture section 4211 is between 0.4 mm² and 0.6 mm². The area of the opening 4214 of the fourth aperture section 4212 is between 0.4 mm² and 0.6 mm². The third aperture section 4211 and the fourth aperture section 4212 of such dimensions facilitate injection molding. Of course, the respective opening area and bottom area of the third aperture section 4211 and the fourth aperture section 4212 may also be set to other numerical values according to actual conditions, which is not limited here.

Optionally, as shown in Fig. 14, the width of the opening 4111 of the second groove 411 is greater than the width of the bottom 4112 of the second groove. Viewed as a whole, the cross-section of the second groove 411 is substantially trapezoidal. During injection molding, the region around the second groove 411 is less prone to injection molding defects, which helps to ensure that the quality of the skin layer 12 molded on the substrate layer 11 and the shape of the outer surface 121 of the skin layer 12 are also good, thereby helping to improve the aesthetics of the cover 1. In one embodiment, the cross-section of the second groove 411 may also be V-shaped or of another suitable shape. In one embodiment, the width of the opening 4111 of the second groove 411 is between 2.5 mm and 3.5 mm, and the width of the bottom 4112 is between 2.5 mm and 3 mm.

It should be understood that in the weakening line of the second embodiment, the extension section 4 may further comprise a portion having only the second groove 411 but not having the second aperture 421. For example, these portions not having the second aperture 421 are away from the tear initiation section 3.

### Weakening Line of the Third Embodiment

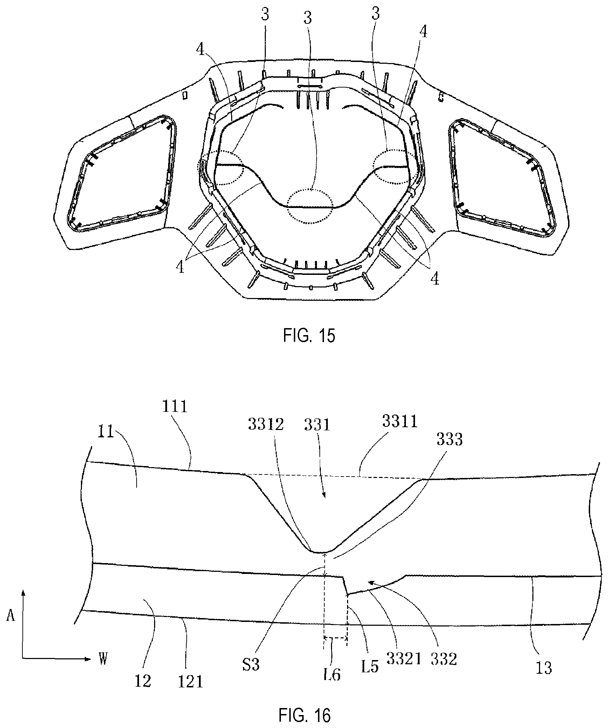

As shown in Fig. 15 and Fig. 3, the weakening line of the third embodiment is overall similar to the weakening line of the first embodiment, and only the differences between the two will be described below.

As shown in Fig. 16, the tear initiation section 3 of the weakening line 2 of the third embodiment comprises a fifth groove 331 and an inner groove of the skin layer 332, and the inner groove of the skin layer 332 is formed at the interface 13 between the substrate layer 11 and the skin layer 12.

Specifically, as shown in Fig. 16, the fifth groove 331 extends from the inner surface 111 of the substrate layer 11 into an interior of the substrate layer 11 along the thickness direction A of the cover 1. In this way, the fifth groove 331 has an opening 3311 located on the inner surface 111 of the substrate layer 11 and a bottom 3312 located within the substrate layer 11. The bottom 3312 of the fifth groove 331 is spaced apart from the interface 13, thereby forming a third residual thickness of the substrate layer S3 between the bottom 3312 of the fifth groove 331 and the interface 13.

As also shown in Fig. 16, the inner groove of the skin layer 332 extends into the skin layer 12 along the thickness direction A of the cover 1 and is filled by the material of the substrate layer 11. The inner groove of the skin layer 332 has a bottom 3321 located within the skin layer 12. The bottom 3321 of the inner groove of the skin layer 332 is spaced apart from the outer surface 121 of the skin layer 12, thereby forming a fifth residual thickness of the skin layer L5 between the bottom 3321 of the inner groove of the skin layer 332 and the outer surface 121 of the skin layer 12. In addition, the bottom 3321 of the inner groove of the skin layer 332 is within a range of an orthographic projection of the fifth groove 331 toward the skin layer 12 and deviates from the bottom 3312 of the fifth groove 331 along a lateral direction W. In the present application, the term "lateral direction" refers to a direction substantially perpendicular to the longitudinal direction of the weakening line.

According to this structure, the fifth groove 331 thins the thickness of the substrate layer 11, and the inner groove of the skin layer 332 also thins the thickness of the skin layer 12, so that the overall thickness at the tear initiation section 3 is reduced, and the strength is correspondingly reduced. Moreover, the inner groove of the skin layer 332 is adjacent to the fifth groove 331 along the lateral direction W, and a thickness of a connecting portion 333 between the two is small, and the strength is also small. When the cover 1 receives the impact of the airbag, the connecting portion 333 is easily torn open and the substrate layer 11 and the skin layer 12 are also easily torn apart, so as to generate a crack at the tear initiation section 3.

In one embodiment, the third residual thickness of the substrate layer S3 is between 0.2 mm and 1.5 mm, preferably between 0.4 mm and 1 mm. The fifth residual thickness of the skin layer L5 is between 0.1 mm and 1.5 mm, preferably between 0.4 mm and 1 mm.

In addition, since the bottom 3321 of the inner groove of the skin layer 332 laterally deviates from the bottom 3312 of the fifth groove 331, along the thickness direction A of the cover 1, the substrate layer 11 has an appropriate thickness corresponding to the inner groove of the skin layer 332 to play a better supporting role for the corresponding portion of the skin layer 12 (i.e., the portion corresponding to the tear initiation section 3). This helps to avoid a weakening mark corresponding to the tear initiation section 3 from being generated on the outer surface 121 of the skin layer 12 or the weakening mark from being easily observed, thereby improving the appearance quality of the cover 1. In one embodiment, a lateral distance L6 between the bottom 3321 of the inner groove of the skin layer 332 and the bottom 3312 of the fifth groove 331 is between 0.6 mm and 1.5 mm.

Optionally, as also shown in Fig. 16, the width of the opening 3311 of the fifth groove 331 is greater than the width of the bottom 3312 of the fifth groove 331. Viewed as a whole, the cross-section of the fifth groove 331 is substantially V-shaped. Similar to the second groove 411, during injection molding, the region around the fifth groove 331 is less prone to injection molding defects, which helps to ensure that the quality of the skin layer 12 molded on the substrate layer 11 and the shape of the outer surface 121 of the skin layer 12 are also good, thereby helping to improve the aesthetics of the cover 1. In one embodiment, the cross-section of the fifth groove 331 may also be trapezoidal or of another suitable shape. In one embodiment, the width of the opening 3311 of the fifth groove 331 is between 6 mm and 8 mm, and the width of the bottom 3312 is between 0.2 mm and 0.7 mm.

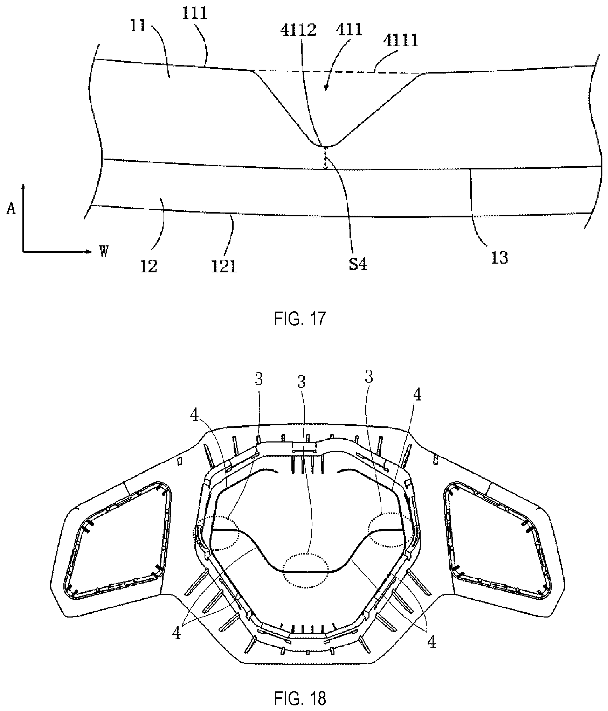

Optionally, as shown in Fig. 17, the structure of the extension section 4 is similar to the structure of the extension section 4 shown in Fig. 7, and both are configured as the second groove 411. In Fig. 17, the second groove 411 extends from the inner surface 111 of the substrate layer 11 into the substrate layer 11 along the thickness direction A of the cover 1. In this way, the second groove 411 has an opening 4111 located on the inner surface 111 of the substrate layer 11 and a bottom 4112 located within the substrate layer 11. The bottom 4112 of the second groove 411 is spaced apart from the interface 13, thereby forming a fourth residual thickness of the substrate layer S4 between the bottom 4112 of the second groove 411 and the interface 13.

Similar to the second groove 411 of the weakening line of the first embodiment, the strength at the second groove 411 is small, so that when the cover 1 receives the impact of the airbag, a crack generated at the tear initiation section 3 will quickly extend along the second groove 411, ultimately causing the cover 1 to tear open. In addition, since the second groove 411 does not penetrate through the substrate layer, the portion of the skin layer 12 corresponding to the second groove 411 receives good support from the substrate layer 11, which makes a weakening mark corresponding to the second groove 411 not easily generated on the outer surface 121 of the skin layer 12, thereby helping to improve the aesthetics of the cover 1. This form of the second groove 411 also helps to prevent the overall strength of the cover 1 from being too small, thereby avoiding accidental damage to the cover 1. In one embodiment, the fourth residual thickness of the substrate layer S4 is between 1 mm and 4 mm. In a preferred embodiment, the fourth residual thickness of the substrate layer S4 is between 2 mm and 3.5 mm.

Optionally, as also shown in Fig. 17, the width of the opening 4111 of the second groove 411 is greater than the width of the bottom 4112. Viewed as a whole, the cross-section of the second groove 411 is substantially V-shaped. Similar to the second groove 411 of the weakening line of the first embodiment, this form of the second groove 411 also helps to improve the quality of the skin layer 12 and ensures that the shape of the outer surface 121 of the skin layer 12 is also good, thereby helping to improve the aesthetics of the cover 1. In one embodiment, the cross-section of the second groove 411 may also be trapezoidal or of another suitable shape. In one embodiment, the width of the opening 4111 of the second groove 411 is between 6 mm and 8 mm, and the width of the bottom 4112 is greater than 0 and less than or equal to 0.5 mm.

### Weakening Line of the Fourth Embodiment

As shown in Fig. 18 and Fig. 3, the weakening line of the fourth embodiment is overall similar to the weakening line of the first embodiment, and only the differences between the two will be described below.

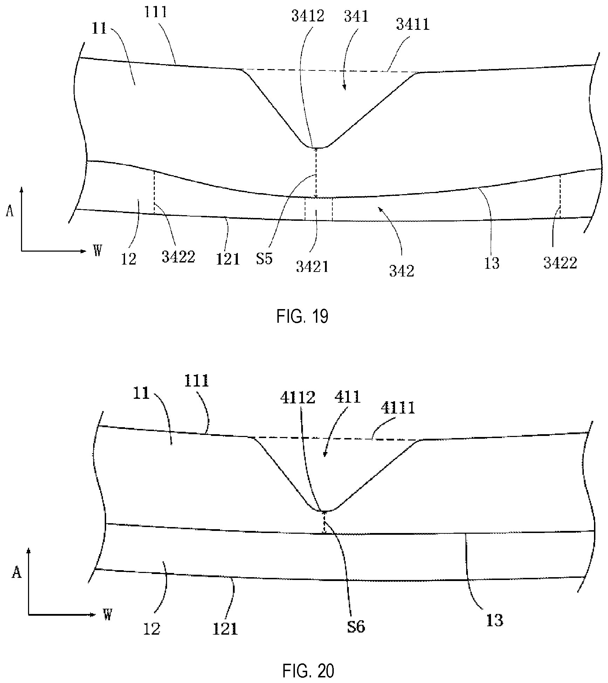

As shown in Fig. 19, the tear initiation section 3 of the weakening line 2 of the fourth embodiment comprises a seventh groove 341 and a thinned region of the skin layer 342. The seventh groove 341 extends from the inner surface 111 of the substrate layer 11 into an interior of the substrate layer 11 along the thickness direction A of the cover 1. In this way, the seventh groove 341 has an opening 3411 located in the inner surface 111 of the substrate layer 11 and a bottom 3412 located within the substrate layer 11. The bottom 3412 of the seventh groove 341 is spaced apart from the interface 13 between the substrate layer 11 and the skin layer 12, thereby forming a fifth residual thickness of the substrate layer S5 between the bottom 3412 of the seventh groove 341 and the interface 13.

As also shown in Fig. 19, the thinned region 342 is configured such that a thickness gradually decreases from both ends 3422 to a middle portion 3421 along a width direction W of the weakening line 2. For example, both an inner surface and an outer surface of the thinned region 342 are in smooth arc shapes. An orthographic projection of the seventh groove 341 toward the skin layer 12 is within a range of the thinned region 342.

According to this structure, the seventh groove 341 and the thinned region 342 jointly reduce the thickness at the tear initiation section 3, thereby reducing the strength at the tear initiation section 3. When the cover 1 receives the impact of the airbag, a crack is generated at the tear initiation section 3. In one embodiment, the bottom 3412 of the seventh groove 341 directly faces the middle portion 3421 of the thinned region 342, which helps to further weaken the strength of the tear initiation section 3. In addition, the seventh groove 341 does not penetrate through the substrate layer 11, and therefore the portion of the skin layer 12 corresponding to the tear initiation section 3 receives good support from the substrate layer 11, which makes a weakening mark corresponding to the tear initiation section 3 not easily generated on the outer surface 121 of the skin layer 12, thereby helping to improve the aesthetics of the cover 1. In one embodiment, the fifth residual thickness of the substrate layer S5 is between 1 mm and 3 mm, preferably between 1.3 mm and 2 mm; a thickness of the middle portion 3421 of the thinned region 342 is between 0.6 mm and 1 mm.

In addition, the thickness of the thinned region 342 decreases smoothly, and there is no significant point of sudden thickness change, which also helps to avoid a weakening mark corresponding to the thinned region 342 from being generated on the outer surface 121 of the skin layer 12; moreover, this form of the thinned region 342 also helps to improve the injection molding quality of the skin layer 12, whereby the appearance quality of the cover 1 is improved.

Optionally, the width of the opening 3411 of the seventh groove 341 is greater than the width of the bottom 3412 of the seventh groove 341. Viewed as a whole, the cross-section of the seventh groove 341 is substantially V-shaped. Similar to the second groove 411, during injection molding, the region around the seventh groove 341 is less prone to injection molding defects, which helps to ensure that the quality of the skin layer 12 molded on the substrate layer 11 and the shape of the outer surface 121 of the skin layer 12 are also good, thereby helping to improve the aesthetics of the cover 1. In one embodiment, the cross-section of the seventh groove 341 may also be trapezoidal or of another suitable shape. In one embodiment, the width of the opening 3411 of the seventh groove 341 is between 6 mm and 8 mm, and the width of the bottom 3412 is between 0.2 mm and 0.7 mm.

Optionally, as also shown in Fig. 20, the structure of the extension section 4 is similar to the structure of the extension section 4 shown in Fig. 7, and both are configured as the second groove 411. In Fig. 20, the second groove 411 extends from the inner surface 111 of the substrate layer 11 into the substrate layer 11 along the thickness direction A of the cover 1. In this way, the second groove 411 has an opening 4111 located on the inner surface 111 of the substrate layer 11 and a bottom 4112 located within the substrate layer 11. The bottom 4112 of the second groove 411 is spaced apart from the interface 13, thereby forming a sixth residual thickness of the substrate layer S6 between the bottom 4112 of the second groove 411 and the interface 13. Similar to the seventh groove 341, the second groove 411 also does not penetrate through the substrate layer 11, and therefore a weakening mark corresponding to the second groove 411 is also not easily generated on the outer surface 121 of the skin layer 12. In one embodiment, the sixth residual thickness of the substrate layer S6 is between 2 mm and 4 mm, preferably between 2.5 mm and 3.5 mm.

Optionally, as also shown in Fig. 20, the width of the opening 4111 of the second groove 411 is greater than the width of the bottom 4112 of the second groove 411. Viewed as a whole, the cross-section of the second groove 411 is substantially V-shaped. Similar to the seventh groove 341, during injection molding, the region around the second groove 411 is less prone to injection molding defects, which helps to ensure that the quality of the skin layer 12 molded on the substrate layer 11 and the shape of the outer surface 121 of the skin layer 12 are also good, thereby helping to improve the aesthetics of the cover 1. In one embodiment, the cross-section of the second groove 411 may also be trapezoidal or of another suitable shape. In one embodiment, the width of the opening 4111 of the second groove 411 is between 6 mm and 8 mm, and the width of the bottom 4112 is greater than 0 and less than or equal to 0.5 mm.

In one embodiment, the cover 1 further comprises a surface finish layer (not shown in the figures). The surface finish layer is located on the outer surface 121 of the skin layer 12. The surface finish layer can impart a special visual effect to the cover 1, such as a matte finish, which also helps to hide weakening marks formed on the outer surface 121 of the skin layer 12. In addition, the surface finish layer also plays a protective role for the skin layer 12 to prevent the skin layer 12 from being rapidly worn down. In one embodiment, the material of the surface finish layer is TPEE (i.e., thermoplastic polyester elastomer), and the thickness is between 50 µm and 100 µm.

It should be noted that the invention (e.g., inventive concepts) has been described in the specification and/or illustrated in the figures of this patent document according to exemplary embodiments. The embodiments of the invention are presented by way of example only, and are not intended as a limitation on the scope of the invention. Elements of the inventive concepts embodied in the invention as described in the specification and/or illustrated in the figures are intended to be illustrative only. Although exemplary embodiments of the invention have been described in detail in this patent document, those of ordinary skill in the art will readily appreciate that equivalents, modifications, variations and the like of the subject matter of the exemplary embodiments and alternative embodiments are possible and are considered to be within the scope of the invention; all such subject matter (e.g., modifications, variations, embodiments, combinations, equivalents, etc.) is intended to be included within the scope of the invention. It should also be noted that various/other modifications, variations, substitutions, equivalents, changes, omissions, etc. may be made in the configuration and/or arrangement of exemplary embodiments (e.g., in concept, design, structure, apparatus, form, assembly, construction, means, function, system, process/method, steps, sequence of process/method steps, operation, operating conditions, performance, materials, compositions, combinations, etc.) without departing from the scope of the invention; all such subject matter is intended to be within the scope of the invention. The scope of the invention is not intended to be limited to the subject matter (e.g., details, structure, functions, materials, acts, steps, sequences, systems, results, etc.) described in the specification and/or illustrated in the figures of this patent document. It is contemplated that the claims of this patent document will be construed appropriately to cover the full scope of the inventive subject matter (e.g., including any and all such modifications, variations, embodiments, combinations, equivalents, etc.); it is to be understood that the terminology used in this patent document is for the purpose of providing a description of the subject matter of exemplary embodiments, and is not intended as a limitation on the scope of the invention.

It should also be noted that according to exemplary embodiments, the invention may include conventional techniques (e.g., as implemented and/or integrated in the exemplary embodiments, modifications, variations, combinations, equivalents) or may include any other applicable techniques (now and/or in the future) with capability of performing the functions and processes/operations described in the specification and/or illustrated in the figures. All such techniques (e.g., as implemented in the form of embodiments, modifications, variations, combinations, equivalents, etc.) are considered to be within the scope of the invention of this patent document.

## Claims

1. An airbag cover, comprising:
- a substrate layer; and
- a skin layer, the skin layer being located on an outer surface of the substrate layer and being integral with the substrate layer;
wherein a weakening line is constructed on the cover, a strength at the weakening line being less than a strength of other portions of the cover; the weakening line comprises at least one tear initiation section and at least one extension section connected to the tear initiation section, a strength at the tear initiation section being less than a strength at the extension section.

2. An airbag cover, comprising:
- a substrate layer; and
- a skin layer, the skin layer being located on an outer surface of the substrate layer;
wherein the cover is molded by two-shot injection molding, and a material used for a first shot in the two-shot injection molding is used to form one of the substrate layer and the skin layer, and a material used for a second shot is used to form the other of the substrate layer and the skin layer;
a weakening line is constructed on the cover, a strength at the weakening line being less than a strength of other portions of the cover.

3. The airbag cover according to claim 2,
wherein the weakening line is injection molded together with the substrate layer and/or the skin layer.

4. The airbag cover according to claim 2,
wherein the weakening line comprises at least one tear initiation section and at least one extension section connected to the tear initiation section, a strength at the tear initiation section being less than a strength at the extension section.

5. The airbag cover according to claim 1 or 4,
wherein a quantity of the tear initiation section is a plurality, a quantity of the extension section is a plurality, and the plurality of extension sections space the plurality of tear initiation sections apart.

6. The airbag cover according to claim 5,
wherein the weakening line comprises two first weakening lines arranged opposite to and spaced apart from each other; each of the first weakening lines comprises a first central portion and two first lateral portions respectively located on both sides of the first central portion;
the weakening line further comprises at least one second weakening line located between the two first weakening lines; the second weakening line comprises a second central portion, two end portions, and two second lateral portions; each of the second lateral portions connects the second central portion and a corresponding end portion, and the two end portions are respectively connected to the corresponding two first central portions;
the tear initiation section comprises two the first central portions, two the end portions, and the second central portion; the extension section comprises two the first lateral portions and two the second lateral portions.

7. The airbag cover according to claim 1 or 4,
wherein the tear initiation section is configured as a first groove;
the first groove extends from an inner surface of the substrate layer into the skin layer along a thickness direction of the cover, and a bottom of the first groove is spaced apart from an outer surface of the skin layer so as to form a first residual thickness of the skin layer between the bottom of the first groove and the outer surface of the skin layer.

8. The airbag cover according to claim 7,
wherein the first residual thickness of the skin layer is between 0.1 mm and 1 mm.

9. The airbag cover according to claim 7,
wherein a width of the bottom of the first groove is greater than 0 and less than or equal to 0.2 mm.

10. The airbag cover according to claim 7, wherein the first groove comprises:
- a first groove section, the first groove section penetrating the substrate layer along the thickness direction of the cover; and
- a second groove section, the second groove section extending from a bottom of the first groove section into the skin layer along the thickness direction of the cover, and a depth of the second groove section being less than a thickness of the skin layer;
wherein an opening width of the second groove section is less than or equal to a bottom width of the first groove section.

11. The airbag cover according to claim 10,
wherein a width of an opening of the first groove section is greater than the width of the bottom of the first groove section; and/or
the opening width of the second groove section is greater than a bottom width of the second groove section.

12. The airbag cover according to claim 1 or 4,
wherein an interface exists between the substrate layer and the skin layer;
the extension section comprises a second groove, the second groove extending from the inner surface of the substrate layer into the substrate layer along the thickness direction of the cover, and a bottom of the second groove being spaced apart from the interface.

13. The airbag cover according to claim 12,
wherein the second groove is configured such that an opening width is greater than a bottom width.

14. The airbag cover according to claim 1 or 4,
wherein the tear initiation section comprises a plurality of first apertures sequentially arranged spaced apart from each other along a longitudinal direction of the tear initiation section, and a third groove connected between adjacent first apertures;
the first aperture extends from the inner surface of the substrate layer into the skin layer along the thickness direction of the cover, and a bottom of the first aperture is spaced apart from the outer surface of the skin layer so as to form a second residual thickness of the skin layer between the bottom of the first aperture and the outer surface of the skin layer;
the third groove extends from the inner surface of the substrate layer into the skin layer along the thickness direction of the cover, and a bottom of the third groove is spaced apart from the outer surface of the skin layer so as to form a third residual thickness of the skin layer between the bottom of the third groove and the outer surface of the skin layer.

15. The airbag cover according to claim 14,
wherein the third residual thickness of the skin layer is greater than the second residual thickness of the skin layer.

16. The airbag cover according to claim 14,
wherein the second residual thickness of the skin layer is between 0.1 mm and 1 mm, and the third residual thickness of the skin layer is between 0.5 mm and 1.5 mm.

17. The airbag cover according to claim 14,
wherein an area of the bottom of the first aperture is between 0.1 mm² and 0.6 mm², and a width of the bottom of the third groove is greater than 0 and less than or equal to 0.2 mm.

18. The airbag cover according to claim 14,
wherein each of the first apertures comprises at least two opposite first apex angles, a connecting line between the first apex angles extending along the longitudinal direction of the tear initiation section; the third groove is connected between the opposite first apex angles of two adjacent first apertures.

19. The airbag cover according to claim 14,
wherein the first aperture comprises:
- a first aperture section, the first aperture section penetrating the substrate layer along the thickness direction of the cover; and
- a second aperture section, the second aperture section extending from a bottom of the first aperture section into the skin layer along the thickness direction of the cover, and a depth of the second aperture section being less than the thickness of the skin layer;
wherein an opening area of the second aperture section is less than or equal to a bottom area of the first aperture section.

20. The airbag cover according to claim 19,
wherein the opening area of the first aperture section is greater than the bottom area of the first aperture section; and/or
the opening area of the second aperture section is greater than a bottom area of the second aperture section.

21. The airbag cover according to claim 19,
wherein a side wall of the first aperture section is formed in a stepped shape.

22. The airbag cover according to claim 14,
wherein the third groove comprises:
- a third groove section, the third groove section penetrating the substrate layer along the thickness direction of the cover; and
- a fourth groove section, the fourth groove section extending from a bottom of the third groove section into the skin layer along the thickness direction of the cover, and a depth of the fourth groove section being less than the thickness of the skin layer;
wherein an opening width of the fourth groove section is less than or equal to a bottom width of the third groove section.

23. The airbag cover according to claim 22,
wherein the opening width of the third groove section is greater than the bottom width of the third groove section; and/or
the opening width of the fourth groove section is greater than a bottom width of the fourth groove section.

24. The airbag cover according to claim 22,
wherein a side wall of the third groove section is a smooth side wall.

25. The airbag cover according to claim 12,
wherein the extension section further comprises a plurality of second apertures, the plurality of second apertures being sequentially arranged spaced apart from each other along a longitudinal direction of the extension section; a quantity of the second groove is a plurality, and one the second groove is connected between adjacent second apertures;
the second aperture extends from the inner surface of the substrate layer into the skin layer along the thickness direction of the cover, and a bottom of the second aperture is spaced apart from the outer surface of the skin layer so as to form a fourth residual thickness of the skin layer between the bottom of the second aperture and the outer surface of the skin layer.

26. The airbag cover according to claim 25,
wherein the fourth residual thickness of the skin layer is between 0.1 mm and 1 mm.

27. The airbag cover according to claim 25,
wherein a bottom area of the second aperture is between 0.1 mm² and 0.6 mm².

28. The airbag cover according to claim 25,
wherein each of the second apertures comprises at least two opposite second apex angles, a connecting line between the second apex angles extending along the longitudinal direction of the extension section; the second groove is connected between the opposite second apex angles of two adjacent second apertures.

29. The airbag cover according to claim 25,
wherein the second aperture comprises:
- a third aperture section, the third aperture section penetrating the substrate layer along the thickness direction of the cover; and
- a fourth aperture section, the fourth aperture section extending from a bottom of the third aperture section into the skin layer along the thickness direction of the cover, and a depth of the fourth aperture section being less than the thickness of the skin layer;
wherein an opening area of the fourth aperture section is less than or equal to a bottom area of the third aperture section.

30. The airbag cover according to claim 29,
wherein the opening area of the third aperture section is greater than the bottom area of the third aperture section; and/or
the opening area of the fourth aperture section is greater than a bottom area of the fourth aperture section.

31. The airbag cover according to claim 1 or 4,
wherein the tear initiation section comprises:
- a fifth groove; the fifth groove extending from the inner surface of the substrate layer into an interior of the substrate layer along the thickness direction of the cover, and a bottom of the fifth groove being spaced apart from the interface between the substrate layer and the skin layer; and
- an inner groove of the skin layer formed at the interface; the inner groove of the skin layer extending into the skin layer along the thickness direction of the cover and being filled by the material of the substrate layer; a bottom of the inner groove of the skin layer being spaced apart from the outer surface of the skin layer so as to form a fifth residual thickness of the skin layer between the bottom of the inner groove of the skin layer and the outer surface of the skin layer;
wherein the bottom of the inner groove of the skin layer is within a range of an orthographic projection of the fifth groove toward the skin layer and deviates from the bottom of the fifth groove.

32. The airbag cover according to claim 31,
wherein the fifth residual thickness of the skin layer is between 0.1 mm and 1.5 mm.

33. The airbag cover according to claim 31,
wherein a lateral distance between the bottom of the inner groove of the skin layer and the bottom of the fifth groove is between 0.6 mm and 1.5 mm.

34. The airbag cover according to claim 31,
wherein the fifth groove is configured such that an opening width is greater than a bottom width.

35. The airbag cover according to claim 1 or 4,
wherein the tear initiation section comprises:
- a seventh groove; the seventh groove extending from the inner surface of the substrate layer into an interior of the substrate layer along the thickness direction of the cover, and a bottom of the seventh groove being spaced apart from the interface between the substrate layer and the skin layer; and
- a thinned region formed in the skin layer, the thinned region being configured such that a thickness gradually decreases from both ends to a middle portion along a width direction of the weakening line; an orthographic projection of the seventh groove toward the skin layer being within a range of the thinned region.

36. The airbag cover according to claim 35,
wherein a thickness of the middle portion of the thinned region is between 0.6 mm and 1 mm.

37. The airbag cover according to claim 35,
wherein the thickness of the thinned region decreases smoothly from both ends to the middle portion along the width direction of the weakening line.

38. The airbag cover according to claim 35,
wherein the bottom of the seventh groove directly faces the middle portion of the thinned region.

39. The airbag cover according to claim 35,
wherein the seventh groove is configured such that an opening width is greater than a bottom width.

40. The airbag cover according to claim 1 or 2,
wherein the airbag cover further comprises a surface decoration layer, the surface decoration layer being located on the outer surface of the skin layer.

41. A vehicle steering wheel, wherein the vehicle steering wheel comprises the airbag cover according to any one of claims 1 to 40.
